# EUROPEAN PATENT APPLICATION

(11) **EP 4 474 092 A1**
(43) Date of publication of application: **11.12.2024**
(21) Application number: 22932186.4
(22) Date of filing: 18.03.2022
(51) Int. Cl.: B23H 1/02, B23H 7/02, G05B 19/409

(54) **DETERMINATION DEVICE AND CONTROL DEVICE**

(71) Applicant: FANUC CORPORATION, Oshino-mura Minamitsuru-gun Yamanashi 401-0597 (JP)
(72) Inventor: YAMAGUCHI Meguru, Minamitsuru-gun, Yamanashi 401-0597 (JP)
(74) Representative: Keil & Schaafhausen Patentanwälte PartGmbB
(86) International application number: PCT/JP2022/012642
(87) International publication number: WO 2023/175913

(57) **Abstract**

A determination device (20) comprises: a display unit (80) that displays machining parameters (PX, PY, PZ) which an electrical discharge machine (10) uses for machining; a table (100) in which a plurality of types of environment parameters are associated with each of the plurality of machining parameters; an acquisition unit (92) that acquires a plurality of types of machining environment information (52) measured by the electrical discharge machine; a determination unit (94) that determines whether at least one of the machining parameters is appropriate for the machining environment of the electrical discharge machine; and a display control unit (96) that controls the display unit and causes the at least one machining parameter to be displayed in an identifiable manner.

## Description

### TECHNICAL FIELD

The present invention relates to a determination device and a control device.

### BACKGROUND ART

JP 2015-089608 A discloses a wire electrical discharge machine that performs machining based on a machining condition obtained by searching manufacturer's machining conditions stored in advance in a control device.

### SUMMARY OF THE INVENTION

However, there is a problem that, depending on the environment in which the electrical discharge machine is installed, the shape accuracy and the like corresponding to the machining conditions stored in advance may not always be realized in actual machining.

The present invention has the object of solving the aforementioned problem.

A first aspect of the present invention is characterized by a determination device including: a display unit configured to display a plurality of machining conditions used for machining by an electrical discharge machine in order to allow an operator to specify a machining condition of the machining conditions; a table in which a plurality of types of environmental conditions suitable for each of the plurality of machining conditions are associated with each of the plurality of machining conditions; an acquisition unit configured to acquire a plurality of types of machining environment information measured by the electrical discharge machine; a determination unit configured to compare the acquired plurality of types of machining environment information with the plurality of types of environmental conditions corresponding to at least one machining condition among the plurality of machining conditions, to thereby determine whether or not the at least one machining condition is suitable for a machining environment of the electrical discharge machine; and a display control unit configured to, in a case that it is determined that the at least one machining condition is not suitable for the machining environment, control the display unit to display the at least one machining condition in an identifiable manner or not to display the at least one machining condition.

A second aspect of the present invention is characterized by a control device of an electrical discharge machine, the control device including the determination device according to the first aspect, the electrical discharge machine being configured to perform the machining on a workpiece by generating electrical discharge between an electrode and the workpiece in accordance with the machining condition specified by the operator.

According to the present invention, it is possible to determine, before machining, whether or not the machining accuracy and the like corresponding to the machining condition can be achieved in actual machining.

### BRIEF DESCRIPTION OF DRAWINGS

FIG. 1 is a diagram showing a wire electrical discharge machine and a determination device according to a first embodiment;
FIG. 2 is a block diagram showing a configuration of the determination device;
FIG. 3 is a diagram illustrating a table in which environmental conditions are associated with machining conditions;
FIG. 4 is a diagram illustrating machining environment information measured by the wire electrical discharge machine;
FIG. 5 is a diagram illustrating machining conditions displayed on a display unit;
FIG. 6 is a diagram illustrating a message indicating that the shape accuracy corresponding to a machining condition designated by an operator cannot be achieved;
FIG. 7 is a diagram illustrating a message indicating machining environment information that does not meet an environmental condition suitable for a machining condition designated by the operator;
FIG. 8 is a flowchart showing a procedure of a determination process as to whether or not a machining condition is suitable for a machining environment;
FIG. 9A and FIG. 9B are diagrams illustrating machining conditions displayed on a display unit of a determination device according to a second embodiment;
FIG. 10A is a diagram illustrating a message indicating that the machining condition designated by the operator is not selectable; FIG. 10B is a diagram illustrating a message indicating that the shape accuracy corresponding to a machining condition designated by an operator cannot be achieved;
FIG. 11 is a flowchart showing a procedure of a determination process as to whether or not machining conditions are suitable for a machining environment;
FIG. 12 is a diagram showing a plurality of wire electrical discharge machines and a determination device according to a first modification;
FIG. 13 is a diagram illustrating a table in which environmental conditions are associated with machining conditions; and
FIG. 14 is a diagram showing an example in which the control device of a wire electrical discharge machine includes a determination device according to a second modification.

### DETAILED DESCRIPTION OF THE INVENTION

### (First Embodiment)

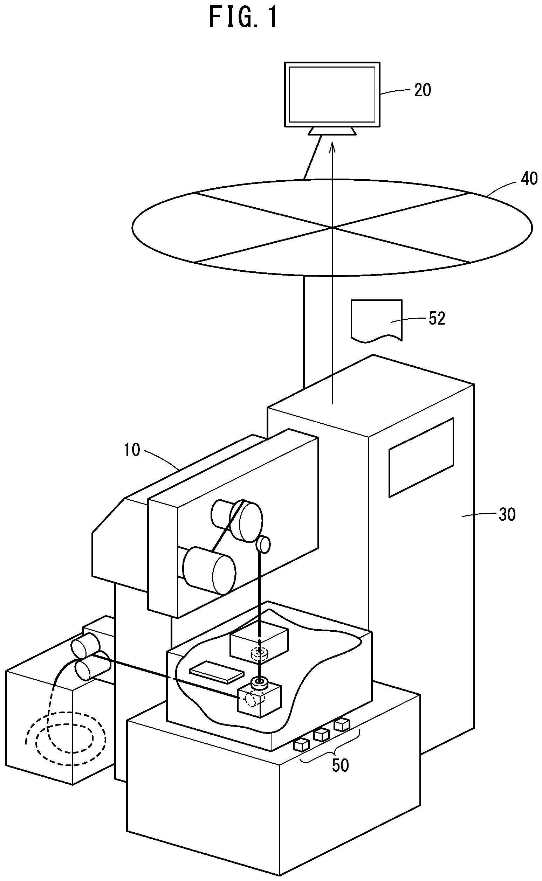

FIG. 1 is a diagram showing a wire electrical discharge machine 10 and a determination device 20 according to a first embodiment. A control device 30 of the wire electrical discharge machine 10 is connected to the determination device 20 via a communication network 40. The wire electrical discharge machine 10 moves a wire electrode relative to a workpiece in accordance with a machining condition specified by an operator, and generates electrical discharge between the wire electrode and the workpiece. In this way, the wire electrical discharge machine 10 performs machining on the workpiece. The control device 30 controls the wire electrical discharge machine 10 to machine the workpiece by electrical discharge.

The wire electrical discharge machine 10 is provided with a sensor group 50 for measuring a machining environment. The sensor group 50 includes at least one of a temperature sensor for measuring a temperature, a resistivity sensor for measuring the resistivity of a dielectric working fluid, or a vibration sensor for measuring vibration, for example. The temperature sensor measures the temperature in the machining environment of the wire electrical discharge machine 10. The measured temperature is, for example, a temperature in the room in which the wire electrical discharge machine 10 is installed.

The resistivity sensor measures the resistivity value of the working fluid used for machining the workpiece by the wire electrical discharge machine 10. The measured resistivity value is a resistivity value of the working fluid in the work pan. The vibration sensor measures the amplitude and frequency of vibration generated by the wire electrical discharge machine 10 serving as a vibration source and vibration received by the wire electrical discharge machine 10 from other vibration sources, in the machining environment of the wire electrical discharge machine 10. The vibration from the other vibration sources is transmitted to the wire electrical discharge machine 10 via the floor surface on which the wire electrical discharge machine 10 is installed.

The control device 30 generates a plurality of types of machining environment information 52 based on the measurement values measured by the sensor group 50. The types of machining environment information 52 include the temperature in the machining environment, the resistivity value of the working fluid used for machining, and the amplitude or frequency of the vibration occurring in the machining environment. The determination device 20 acquires the plurality of types of machining environment information 52 measured by the wire electrical discharge machine 10 from the control device 30 via the communication network 40.

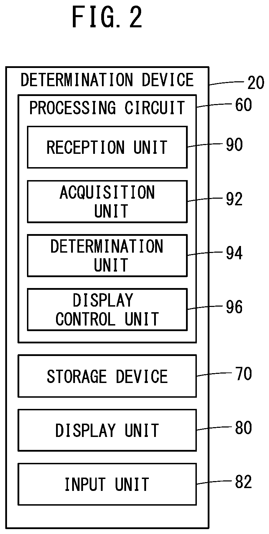

FIG. 2 is a block diagram showing the configuration of the determination device 20. The determination device 20 includes a processing circuit 60, a storage device 70, a display unit 80, and an input unit 82. The processing circuit 60 includes a processor such as a CPU and a GPU.

The storage device 70 includes a volatile memory such as a RAM and a nonvolatile memory such as a ROM and a flash memory. The nonvolatile memory stores programs executed by the processor and also stores other necessary data. The volatile memory is used as a working memory for the processor.

The storage device 70 stores a table (a table 100 described later) in which environmental conditions are associated with the machining conditions. The storage device 70 further stores the above-described plurality of types of machining environment information 52. Specific examples of the plurality of types of machining environment information 52 will be described later.

The display unit 80 includes, for example, a liquid crystal display or an organic EL display. The display unit 80 displays a plurality of machining conditions to allow the operator to specify the machining condition used by the wire electrical discharge machine 10 for machining. The input unit 82 is, for example, a mouse, a keyboard, a touch panel, or the like. The touch panel is attached to the display screen of the display unit 80. The operator operates the input unit 82 to specify the machining condition used by the wire electrical discharge machine 10 for machining.

The processing circuit 60 includes a reception unit 90, an acquisition unit 92, a determination unit 94, and a display control unit 96. The processing circuit 60 executes a program stored in the storage device 70, thereby realizing the reception unit 90, the acquisition unit 92, the determination unit 94, and the display control unit 96. At least a part of the reception unit 90, the acquisition unit 92, the determination unit 94, and the display control unit 96 may be realized by an integrated circuit such as an ASIC or an FPGA, or an electronic circuit including a discrete device.

The reception unit 90 receives the machining condition designated by the operator via the input unit 82. The operator operates the input unit 82 to specify the machining condition used for machining by the wire electrical discharge machine 10.

The acquisition unit 92 acquires the plurality of types of machining environment information 52 measured by the wire electrical discharge machine 10 from the control device 30 of the wire electrical discharge machine 10. The plurality of types of machining environment information 52 acquired by the acquisition unit 92 are stored in the storage device 70.

The determination unit 94 reads out a plurality of types of environmental conditions suitable for the machining condition received by the reception unit 90 from the table 100 of the storage device 70. The types of environmental conditions include the temperature in the machining environment, the resistivity value of the working fluid used for machining, and the amplitude or frequency of the vibration occurring in the machining environment. The determination unit 94 compares the plurality of types of machining environment information 52 acquired by the acquisition unit 92 with the plurality of types of environmental conditions read from the table 100. By performing such a comparison, it is determined whether or not the machining condition specified by the operator (the machining condition to be determined, or the target machining condition) is suitable for the machining environment of the wire electrical discharge machine 10.

Specifically, when all of the plurality of types of machining environment information 52 meet the corresponding environmental conditions, the target machining condition is determined to be suitable for the machining environment. In the present embodiment, the types of machining environment information 52 and the types of environmental condition include the temperature, the resistivity, and the vibration described above.

In this case, when all of the following three conditions (a), (b), and (c) are satisfied, the target machining condition is determined to be suitable for the machining environment. If at least one of the three conditions (a), (b), and (c) is not satisfied, the target machining condition is determined to be unsuitable for the machining environment.
(a) The machining environment information 52 related to temperature meets the environmental condition related to temperature.
(b) The machining environment information 52 related to the resistivity meets the environmental condition related to resistivity.
(c) The machining environment information 52 related to vibration meets the environmental condition related to vibration.

When it is determined that the target machining condition is not suitable for the machining environment, the display control unit 96 controls the display unit 80 to identifiably display the target machining condition (identification display). The display control unit 96 causes the display unit 80 to display the target machining condition more palely than the other machining conditions, for example, to thereby display the target machining condition in an identifiable manner.

The display control unit 96 may cause the display unit 80 to display a message, to thereby identifiably display the target machining condition. The message indicates that the machining accuracy corresponding to the target machining condition cannot be achieved. In the present embodiment, the shape accuracy of a finished workpiece by machining is associated, as the machining accuracy corresponding to the machining condition, with each machining condition. The display control unit 96 may control the display unit 80 to display a message indicating the machining environment information 52 that does not meet the environmental condition associated with the target machining condition.

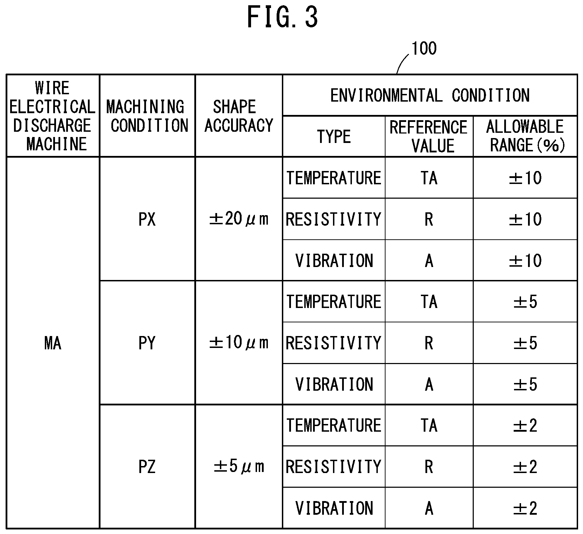

FIG. 3 is a diagram illustrating a table 100 in which environmental conditions are associated with the machining conditions PX, PY, and PZ. The table 100 is stored in the storage device 70. In the example shown in FIG. 3, three machining conditions PX, PY, and PZ are set in the table 100 for one wire electrical discharge machine MA (the wire electrical discharge machine 10). The machining condition PX corresponds to the shape accuracy of ±20 µm of the finished workpiece by machining. The machining condition PY corresponds to the shape accuracy of ±10 µm of the finished workpiece by machining. The machining condition PZ corresponds to the shape accuracy of ±5 µm of the finished workpiece by machining.

Instead of the shape accuracy of the finished workpiece by machining, another type of machining accuracy may be associated with each machining condition. As another type of machining accuracy, for example, the surface roughness of the finished workpiece by machining may be associated with each machining condition. Alternatively, instead of the machining accuracy, the machining speed may be associated with each machining condition.

As shown in FIG. 3, the types of environmental conditions are the temperature, the resistivity, and the vibration described above. As for the temperature, a reference value is determined for each individual wire electrical discharge machine 10. In one wire electrical discharge machine MA (the wire electrical discharge machine 10), a reference value TA for temperature is used. The reference value R for resistivity and the reference value A for vibration have respectively the same values regardless of each individual wire electrical discharge machine 10.

In the example shown in FIG. 3, as the environmental condition with respect to the machining condition PX, a range of ±10% with respect to each of the reference values of the temperature, the resistivity, and the vibration is set as the allowable range. As the environmental condition with respect to the machining condition PY, a range of ±5% with respect to each of the reference values of the temperature, the resistivity, and the vibration is set as the allowable range. As the environmental condition with respect to the machining condition PZ, a range of ±2% with respect to each of the reference values TA, R, A of the temperature, the resistivity, and the vibration is set as the allowable range. In this way, the environmental conditions suitable for the machining conditions PX, PY, and PZ are set in the table 100.

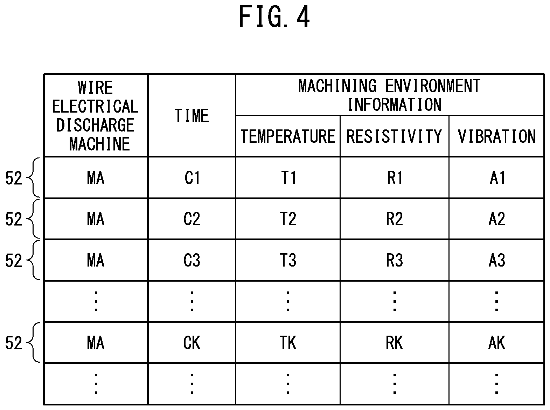

FIG. 4 is a diagram illustrating the machining environment information 52 measured by the wire electrical discharge machine 10. The machining environment information 52 is stored in the storage device 70. In the example shown in FIG. 4, three types of machining environment information 52 are recorded in time series for the measured wire electrical discharge machine MA (the wire electrical discharge machine 10).

For example, at time C1, the measurement value T1 of the machining environment information 52 related to temperature, the measurement value R1 of the machining environment information 52 related to resistivity, and the measurement value A1 of the machining environment information 52 related to vibration are recorded. As time passes, for example, as time C1, C2, C3, ..., CK, ..., the three types of machining environment information 52 are repeatedly recorded. Note that, as the reference value TA (FIG. 3) for the temperature of the one wire electrical discharge machine MA (the wire electrical discharge machine 10), a mean value of some or all of the measured values T1, T2, T3, ..., TK, ... of the machining environment information 52 related to the temperature may be used.

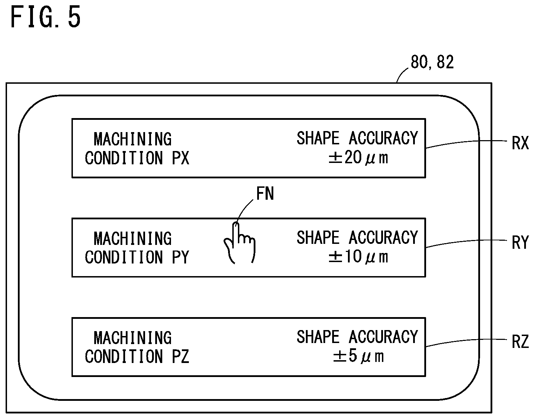

FIG. 5 is a diagram illustrating the machining conditions PX, PY, and PZ displayed on the display unit 80. In order to allow the operator to specify the machining condition PX, PY, or PZ used for machining by the wire electrical discharge machine 10, the plurality of machining conditions PX, PY, and PZ are displayed on the display unit 80. In the example shown in FIG. 5, fields RX, RY, and RZ corresponding respectively to the three machining conditions PX, PY, and PZ are displayed on the display unit 80.

As described above, the display unit 80 is a touch panel, and thus is also the input unit 82. When the operator wants to specify the machining condition PY, the operator touches the field RY with his/her finger FN. The reception unit 90 receives the specified machining condition PY. The determination unit 94 reads the three types of environmental conditions suitable for the machining condition PY from the storage device 70. These three types of environmental conditions are set in the table 100 shown in FIG. 3.

As the environmental condition related to the temperature suitable for the machining condition PY in the wire electrical discharge machine MA (the wire electrical discharge machine 10), the reference value TA and the allowable range ±5% are set in the table 100. As the environmental condition related to the resistivity suitable for the machining condition PY in the wire electrical discharge machine MA (the wire electrical discharge machine 10), the reference value R and the allowable range ±5% are set in the table 100. As the environmental condition related to the resistivity suitable for the machining condition PY in the wire electrical discharge machine MA (the wire electrical discharge machine 10), the reference value R and the allowable range ±5% are set in the table 100.

The determination unit 94 compares the three types of machining environment information 52 (see FIG. 4) measured by the wire electrical discharge machine 10 with the three types of environmental conditions (see FIG. 3) set in the table 100. The determination unit 94 determines whether or not the machining condition PY designated by the operator is suitable for the machining environment of the wire electrical discharge machine MA (the wire electrical discharge machine 10).

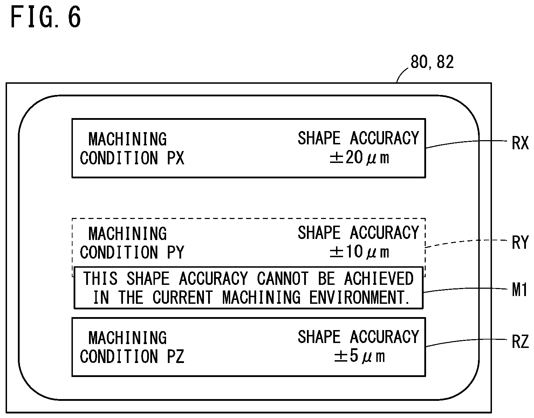

FIG. 6 is a diagram illustrating a message M1 indicating that the shape accuracy corresponding to the machining condition PY specified by the operator cannot be achieved. Here, it is assumed that the machining condition PY designated by the operator is determined to be unsuitable for the machining environment. In this case, the display control unit 96 causes the display unit 80 to display the field RY corresponding to the machining condition PY more palely than the fields RX and RZ corresponding to the other machining conditions PX and PZ, thereby displaying the field RY in an identifiably manner. In addition, the display control unit 96 causes the display unit 80 to display a message M1 indicating that the shape accuracy corresponding to the machining condition PY cannot be achieved, thereby performing identification display.

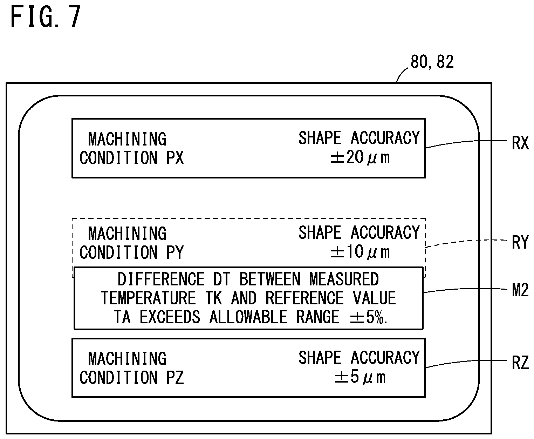

FIG. 7 is a diagram illustrating a message M2 indicating the machining environment information 52 that does not meet the environmental condition suitable for the machining condition PY designated by the operator. The display control unit 96 causes the display unit 80 to display the message M2. In the example shown in FIG. 7, a difference DT between the measured value TK of the machining environment information 52 regarding the temperature and the reference value TA of the temperature set as the environmental condition suitable for the machining condition PY is displayed. It is also displayed that the difference DT exceeds the allowable range of ±5% with respect to the reference value TA for the temperature. The message M2 may indicate the ratio of the difference DT to the reference value TA or the percentage of the ratio, not the difference DT.

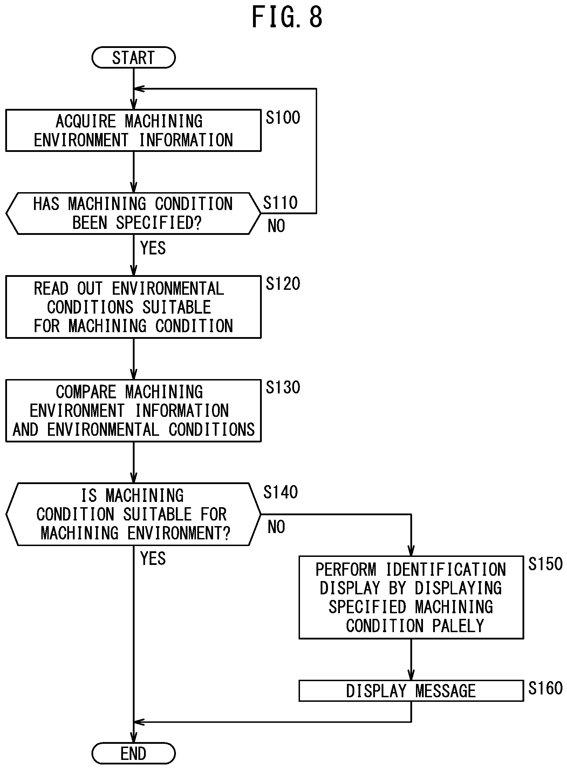

FIG. 8 is a flowchart showing a procedure of a determination process as to whether or not the machining condition PX, PY, or PZ is suitable for the machining environment. This process procedure is performed by, for example, the processing circuit 60 included in the determination device 20 executing a program stored in the storage device 70. When the present process procedure is started, in step S100, the acquisition unit 92 of the processing circuit 60 acquires a plurality of types of the machining environment information 52 measured by the wire electrical discharge machine 10, from the control device 30 of the wire electrical discharge machine 10.

In step S110, the reception unit 90 of the processing circuit 60 determines whether or not the machining condition PX, PY, or PZ has been specified by the operator via the input unit 82. If YES in step S110, the specified machining condition PX, PY, or PZ is received by the reception unit 90, and the process procedure proceeds to step S120. If the result in step S110 is NO, the process procedure returns to step S100.

In step S120, the determination unit 94 of the processing circuit 60 reads, from the storage device 70, a plurality of types of the environmental conditions suitable for the machining condition PX, PY, or PZ received by the reception unit 90. In step S130, the determination unit 94 compares the plurality of types of machining environment information 52 acquired in step S100 with the plurality of types of environmental conditions read in step S120. In step S140, the determination unit 94 determines whether or not the machining condition PX, PY, or PZ specified in step S110 is suitable for the machining environment of the wire electrical discharge machine 10.

If YES in step S140, the machining condition PX, PY, or PZ designated in step S110 is determined as the machining condition used by the wire electrical discharge machine 10 for machining, and the present process procedure is terminated. If the result in step S140 is NO, the process procedure proceeds to step S150. In step S150, the display control unit 96 of the processing circuit 60 controls the display unit 80 to display the machining condition PX, PY, or PZ designated in step S110 more palely than the other machining conditions, thereby displaying the designated machining condition in an identifiable manner.

In step S160, the display control unit 96 displays the messages M1 and M2 on the display unit 80, thereby identifiably displaying the machining condition PX, PY, or PZ specified in step S110. The message M1 indicates that the shape accuracy corresponding to the machining condition PX, PY, or PZ designated in step S110 cannot be achieved (see FIG. 6). The message M2 indicates the machining environment information 52 that does not meet the environmental condition associated with the machining condition PX, PY, or PZ designated in step S110 (see FIG. 7). When the processing of step S160 is completed, the present process procedure is terminated.

### (Second Embodiment)

In the determination device 20 according to the first embodiment, it is determined whether or not the machining condition PX, PY, or PZ specified by the operator is suitable for the machining environment of the wire electrical discharge machine 10. In the determination device 20 according to a second embodiment, the determination unit 94 of the processing circuit 60 determines whether each of the plurality of machining conditions PX, PY, and PZ is suitable for the machining environment of the wire electrical discharge machine 10. The description of the configuration and processing of the determination device 20 according to the second embodiment that are common to the determination device 20 according to the first embodiment will be omitted.

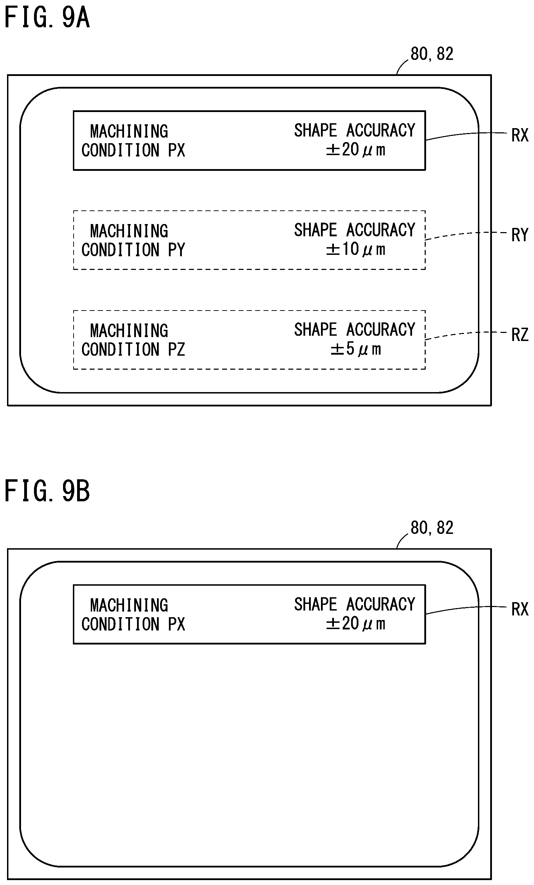

FIG. 9A is a diagram illustrating machining conditions PX, PY, PZ displayed on a display unit 80 of a determination device 20 according to a second embodiment. The display control unit 96 of the processing circuit 60 causes the display unit 80 to identifiably display the machining conditions PY and PZ that have been determined to be unsuitable for the machining environment. In the example shown in FIG. 9A, the fields RY and RZ corresponding to the machining conditions PY and PZ are displayed more palely than the field RX corresponding to the machining condition PX that has been determined to be suitable for the machining environment. Since the display unit 80 also serves as the input unit 82, the operator touches the field RX to specify the machining condition PX determined to be suitable for the machining environment. The reception unit 90 of the processing circuit 60 receives the machining condition PX specified by the operator.

In the example shown in FIG. 9B, unlike FIG. 9A, the fields RY and RZ corresponding to the machining conditions PY and PZ are not displayed. When it is determined that the machining conditions PY and PZ are not suitable for the machining environment, the display control unit 96 controls the display unit 80 not to display the fields RY and RZ corresponding to the machining conditions PY and PZ. The operator touches the field RX displayed on the display unit 80, to specify the machining condition PX determined to be suitable for the machining environment. The reception unit 90 receives the machining condition PX specified by the operator.

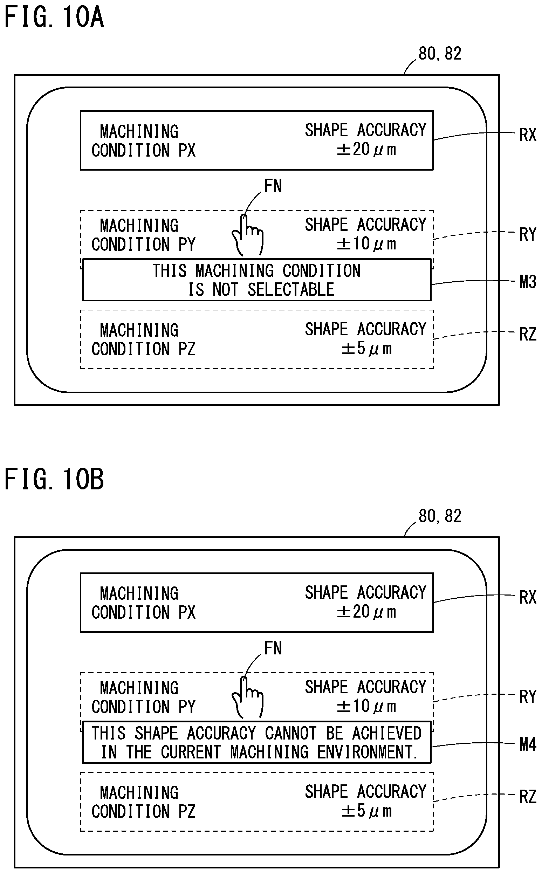

FIG. 10A is a diagram illustrating a message M3 indicating that the machining condition PY designated by the operator is not selectable. FIG. 10A shows a state in which, in the example shown in FIG. 9A, the operator touches the field RY corresponding to the machining condition PY displayed more palely with his/her finger FN to designate the field RY. The reception unit 90 determines that the machining condition PY unsuitable for the machining environment of the wire electrical discharge machine 10 has been designated. The display control unit 96 controls the display unit 80 to display a message M3 indicating that the designated machining condition PY is not selectable.

FIG. 10B is a diagram illustrating a message M4 indicating that the shape accuracy corresponding to the machining condition PY specified by the operator cannot be achieved. FIG. 10B shows a state in which, in the example shown in FIG. 9A, the operator touches the field RY corresponding to the machining condition PY displayed more palely with his/her finger FN to designate the field RY.

The reception unit 90 determines that the machining condition PY unsuitable for the machining environment of the wire electrical discharge machine 10 has been designated. The display control unit 96 controls the display unit 80 to display a message M4 indicating that the shape accuracy corresponding to the designated machining condition PY cannot be achieved. In this case, the operator may be allowed to select the machining condition PY even though the shape accuracy corresponding to the machining condition PY cannot be achieved.

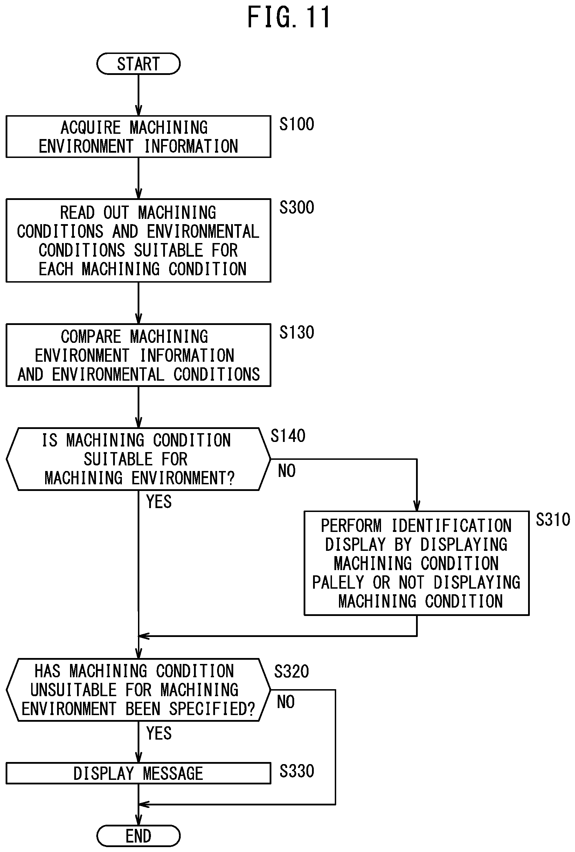

FIG. 11 is a flowchart showing a procedure of a determination process regarding whether or not the machining conditions PX, PY, and PZ are suitable for the machining environment. This process procedure is performed by, for example, the processing circuit 60 included in the determination device 20 executing a program stored in the storage device 70. The reference numerals assigned to the steps of the process procedure shown in FIG. 11 partially coincide with the reference numerals assigned to the steps of the process procedure shown in FIG. 8. In the steps having the same reference numerals, the same processing is executed, and thus the description of the processing in these steps will be omitted.

When the process procedure is started, the processing of step S100 is performed. When the processing of step S100 is completed, in step S300, the determination unit 94 of the processing circuit 60 reads a plurality of types of environmental conditions suitable for each of the plurality of machining conditions PX, PY, and PZ from the storage device 70. When the processing of step S300 is completed, the process procedure proceeds to step S130.

If the determination result in step S140 is YES, the process proceeds to step S320. If the determination result in step S140 is NO, the process proceeds to step S310. In step S310, the display control unit 96 of the processing circuit 60 controls the display unit 80 to display the machining condition that has been determined to be unsuitable for the machining environment, more palely than the other machining conditions, thereby displaying the machining conditions in an identifiable manner. The machining condition determined to be unsuitable for the machining environment may not be displayed more palely but may be hidden. When the processing of step S310 is completed, the process procedure proceeds to step S320.

In step S320, the reception unit 90 of the processing circuit 60 receives the machining condition PX, PY, or PZ specified by the operator via the input unit 82. The reception unit 90 determines whether or not a machining condition unsuitable for the machining environment of the wire electrical discharge machine 10 has been specified. If the determination result in step S320 is YES, the process proceeds to step S330. If the determination result in step S320 is NO, the process ends.

In step S330, the display control unit 96 causes the display unit 80 to display a message M3 indicating that the specified machining condition PX, PY, or PZ is not selectable. The display control unit 96 may cause the display unit 80 to display a message M4 indicating that the shape accuracy corresponding to the specified machining condition PX, PY, or PZ cannot be achieved. When the processing of step S330 is completed, the present process procedure is terminated.

### [Modifications]

The above-described embodiments may be modified in the following manner.

### (Modification 1)

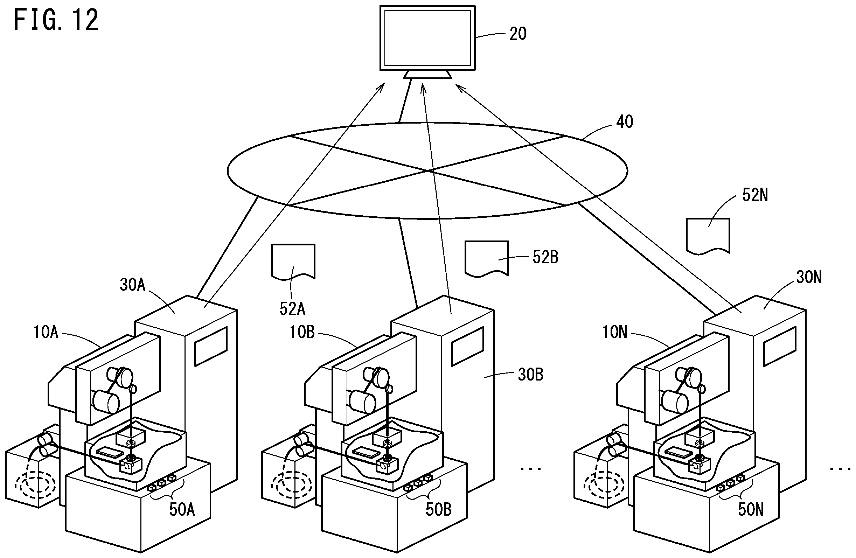

In the above embodiment, the determination device 20 performs the determination process on whether or not the machining condition is suitable for the machining environment for one wire electrical discharge machine 10 (a single wire electrical discharge machine MA). However, the determination device 20 may perform the determination process on whether the machining condition is suitable for the machining environment for each of the plurality of wire electrical discharge machines 10. FIG. 12 is a diagram illustrating a plurality of wire electrical discharge machines 10A, 10B, ..., 10N, ... and the determination device 20 according to a first modification.

A sensor group 50A for measuring a machining environment is installed in the wire electrical discharge machine 10A. The control device 30A generates a plurality of types of machining environment information 52A based on the measurement values measured by the sensor group 50A. The determination device 20 acquires the plurality of types of machining environment information 52A measured by the wire electrical discharge machine 10A from the control device 30A via the communication network 40. The same processing is performed for each of the other wire electrical discharge machines 10B, ..., 10N, ....

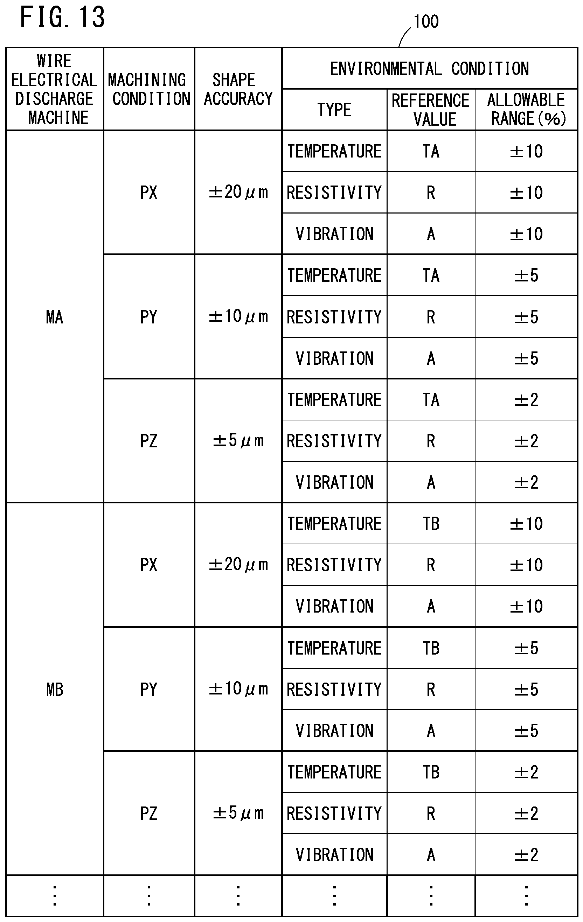

FIG. 13 is a diagram illustrating a table 100 in which the environmental conditions are associated with the machining conditions PX, PY, and PZ. The plurality of wire electrical discharge machines 10A, 10B, ... correspond to the individual wire electrical discharge machines MA, MB, ... (the wire electrical discharge machines 10). In the table 100, machining conditions PX, PY, and PZ corresponding to the wire electrical discharge machine MA (wire electrical discharge machine 10A), which is the wire electrical discharge machine 10, are set.

Further, in the table 100, machining conditions PX, PY, and PZ corresponding to the wire electrical discharge machine MB (wire electrical discharge machine 10B) , which is the wire electrical discharge machine 10, are set. Similarly, in the table 100, machining conditions PX, PY, and PZ corresponding to each of the plurality of wire electrical discharge machines 10A, 10B, ... are set. In the table 100, the three types of environmental conditions suitable for each of the machining conditions PX, PY, and PZ are set for each wire electrical discharge machine 10.

When another wire electrical discharge machine MB (the wire electrical discharge machine 10) is installed in an environment different from that of the wire electrical discharge machine MA (the wire electrical discharge machine 10), the environmental condition regarding the temperature is also different. Accordingly, in the example illustrated in FIG. 13, the reference value TB for the temperature corresponding to the wire electrical discharge machine MB (the wire electrical discharge machine 10) is different from the reference value TA for the temperature corresponding to the wire electrical discharge machine MA (the wire electrical discharge machine 10).

The acquisition unit 92 of the processing circuit 60 acquires the three types of machining environment information 52A, 52B, ... measured by each of the plurality of wire electrical discharge machines 10A, 10B, .... The three types of machining environment information 52A, 52B, ... acquired by the acquisition unit 92 are stored in the storage device 70. The determination unit 94 of the processing circuit 60 determines whether each of the machining conditions to be determined is suitable for the machining environment, for each wire electrical discharge machine 10. The display control unit 96 of the processing circuit 60 causes the display unit 80 to display the machining condition determined to be unsuitable for the machining environment in an identifiable manner or not to display that machining condition, for each wire electrical discharge machine 10.

### (Modification 2)

In the above-described embodiments, the control device 30 of the wire electrical discharge machine 10 is connected to the determination device 20 via the communication network 40. However, the control device 30 of the wire electrical discharge machine 10 may include the determination device 20. The processing circuit 60, the storage device 70, the display unit 80, and the input unit 82 of the determination device 20 may have hardware common to the processing circuit, the storage device, the display unit, and the input unit of the control device 30.

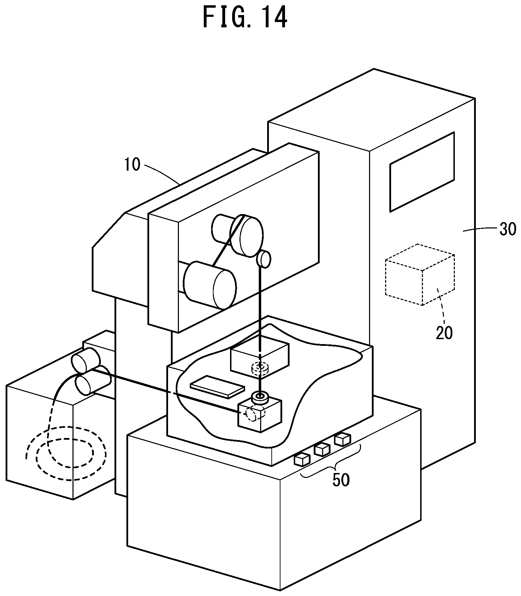

FIG. 14 is a diagram showing an example in which the control device 30 of the wire electrical discharge machine 10 includes the determination device 20 according to the second modification. The wire electrical discharge machine 10 is provided with a sensor group 50 for measuring a machining environment. The control device 30 or the determination device 20 generates a plurality of types of machining environment information 52 based on the measurement values measured by the sensor group 50. The determination device 20 compares the machining environment information 52 measured by the wire electrical discharge machine 10 with the environmental conditions set in the table 100. The determination device 20 determines whether or not the machining condition to be determined is suitable for the machining environment of the wire electrical discharge machine 10. The determination device 20 performs display control similar to that in the above-described embodiments in accordance with the determination result.

### (Modification 3)

In the above embodiments, the wire electrical discharge machine 10 has been described as an example, but the present invention is not limited to the wire electrical discharge machine 10 as long as the machine is an electrical discharge machine. For example, the machine may be a die-sinking electrical discharge machine.

### (Modification 4)

The above-described embodiments and modifications may be optionally combined.

The present invention is not limited to the above-described embodiments and modifications, and various configurations can be adopted therein without departing from the essence and gist of the present invention.

### [Invention that can be Obtained from Embodiments]

The inventions that can be grasped from the above-described embodiments and the modifications thereof will be described below.
(1) The determination device (20) includes: the display unit (80) configured to display the plurality of machining conditions (PX, PY, PZ) used for machining by the electrical discharge machine (10) in order to allow the operator to specify a machining condition of the machining conditions; the table (100) in which the plurality of types of environmental conditions suitable for each of the plurality of machining conditions are associated with each of the plurality of machining conditions; the acquisition unit (92) configured to acquire the plurality of types of machining environment information (52) measured by the electrical discharge machine; the determination unit (94) configured to compare the acquired plurality of types of machining environment information with the plurality of types of environmental conditions corresponding to the at least one machining condition among the plurality of machining conditions, to thereby determine whether or not the at least one machining condition is suitable for the machining environment of the electrical discharge machine; and the display control unit (96) configured to, in a case that it is determined that the at least one machining condition is not suitable for the machining environment, control the display unit to display the at least one machining condition in an identifiable manner or not to display the at least one machining condition. Thus, it is possible to determine, before machining, whether or not the machining accuracy and the like corresponding to the machining condition can be achieved in actual machining.
(2) The display control unit may display the at least one machining condition more palely than the other machining conditions to thereby display the at least one machining condition in the identifiable manner. This makes it possible to call the operator's attention to the fact that the machining accuracy and the like corresponding to the machining condition cannot be achieved.
(3) The determination device may further include: the reception unit (90) configured to receive the machining condition, of the machining conditions, that has been specified by the operator for use in the machining, and in a case that the machining condition specified by the operator is not suitable for the machining environment, the display control unit may display the first message (M1, M3, M4) indicating that the machining condition specified by the operator is not selectable or that the machining accuracy or the machining speed corresponding to the machining condition is not achievable, to thereby display the machining condition in the identifiable manner. With this configuration, it is possible to strongly call the operator's attention to the fact that the machining accuracy and the like corresponding to the machining condition cannot be achieved.
(4) The determination unit may determine whether or not the machining condition specified by the operator is suitable for the machining environment. This eliminates the need for performing the determination process for the other machining conditions.
(5) The determination unit may compare the acquired plurality of types of machining environment information with the plurality of types of environmental conditions corresponding to each of the plurality of machining conditions, to thereby determine whether or not each of the plurality of machining conditions is suitable for the machining environment of the electrical discharge machine. Thus, the operator can specify the machining condition suitable for the machining environment.
(6) The determination unit may determine the machining condition in which all of the plurality of types of machining environment information meet the corresponding environmental conditions, to be suitable for the machining environment, and the determination unit may determine the machining condition in which at least one of the plurality of types of machining environment information does not meet the corresponding environmental condition, to be unsuitable for the machining environment. Thus, it is possible to accurately determine whether or not the machining condition is suitable for the machining environment.
(7) In the case that the machining condition unsuitable for the machining environment is present, the display control unit may cause the display unit to display the second message (M2) indicating the machining environment information unsuitable for the environmental condition. This allows the operator to grasp the factor that causes unsuitability of the machining condition for the machining environment.
(8) The second message may contain the value corresponding to the difference (DT) between the reference value (TA) for the environmental condition and the measurement value (TK) of the machining environment information that does not meet the environmental condition. This allows the operator to grasp the degree of deviation of the measured value of the machining environment information from the reference value.
(9) The types of machining environment information and the types of environmental conditions may include the temperature in the machining environment, the resistivity of a working fluid used for the machining, or the amplitude or the frequency of vibration occurring in the machining environment. Thus, it is possible to more accurately determine whether the machining condition is suitable for the machining environment.
(10) The acquisition unit may acquire the plurality of types of machining environment information measured by each of the plurality of the electrical discharge machines, the determination unit may determine whether or not each of the plurality of machining conditions is suitable for the machining environment, for each of the electrical discharge machines, and in each of the plurality of electrical discharge machines, in the case that it is determined that the at least one machining condition is not suitable for the machining environment, the display control unit may display the at least one machining condition in the identifiable manner or may not display the at least one machining condition. Thus, the determination process regarding whether or not the machining condition is suitable for the machining environment can be performed by one determination device, for each of the plurality of electrical discharge machines.
(11) The control device (30) of the electrical discharge machine that performs the machining on the workpiece by generating electrical discharge between the electrode and the workpiece in accordance with the machining condition specified by the operator, includes the determination device. Thus, the determination process regarding whether or not the machining condition is suitable for the machining environment can be performed by the control device of the electrical discharge machine.

### REFERENCE SIGNS LIST

10: wire electrical discharge machine
20: determination device
30: control device
40: communication network
50: sensor group
52: machining environment information
60: processing circuit
70: storage device
80: display unit
82: input unit
90: reception unit
92: acquisition unit
94: determination unit
96: display control unit
100: table

## Claims

1. A determination device (20) comprising:
a display unit (80) configured to display a plurality of machining conditions (PX, PY, PZ) used for machining by an electrical discharge machine (10) in order to allow an operator to specify a machining condition of the machining conditions;
a table (100) in which a plurality of types of environmental conditions suitable for each of the plurality of machining conditions are associated with each of the plurality of machining conditions;
an acquisition unit (92) configured to acquire a plurality of types of machining environment information (52) measured by the electrical discharge machine;
a determination unit (94) configured to compare the acquired plurality of types of machining environment information with the plurality of types of environmental conditions corresponding to at least one machining condition among the plurality of machining conditions, to thereby determine whether or not the at least one machining condition is suitable for a machining environment of the electrical discharge machine; and
a display control unit (96) configured to, in a case that it is determined that the at least one machining condition is not suitable for the machining environment, control the display unit to display the at least one machining condition in an identifiable manner or not to display the at least one machining condition.

2. The determination device according to claim 1, wherein
the display control unit displays the at least one machining condition more palely than the other machining conditions to thereby display the at least one machining condition in the identifiable manner.

3. The determination device according to claim 1 or 2, further comprising:
a reception unit (90) configured to receive the machining condition, of the machining conditions, that has been specified by the operator for use in the machining,
wherein, in a case that the machining condition specified by the operator is not suitable for the machining environment, the display control unit displays a first message (M1, M3, M4) indicating that the machining condition specified by the operator is not selectable or that a machining accuracy or a machining speed corresponding to the machining condition is not achievable, to thereby display the machining condition in the identifiable manner.

4. The determination device according to claim 3, wherein
the determination unit determines whether or not the machining condition specified by the operator is suitable for the machining environment.

5. The determination device according to any one of claims 1 to 3, wherein
the determination unit compares the acquired plurality of types of machining environment information with the plurality of types of environmental conditions corresponding to each of the plurality of machining conditions, to thereby determine whether or not each of the plurality of machining conditions is suitable for the machining environment of the electrical discharge machine.

6. The determination device according to any one of claims 1 to 5, wherein
the determination unit determines the machining condition in which all of the plurality of types of machining environment information meet the corresponding environmental conditions, to be suitable for the machining environment, and the determination unit determines the machining condition in which at least one of the plurality of types of machining environment information does not meet the corresponding environmental condition, to be unsuitable for the machining environment.

7. The determination device according to claim 6, wherein
in a case that the machining condition unsuitable for the machining environment is present, the display control unit causes the display unit to display a second message (M2) indicating the machining environment information unsuitable for the environmental condition.

8. The determination device according to claim 7, wherein
the second message contains a value corresponding to a difference (DT) between a reference value (TA) for the environmental condition and a measurement value (TK) of the machining environment information that does not meet the environmental condition.

9. The determination device according to any one of claims 1 to 8, wherein
the types of machining environment information and the types of environmental conditions include a temperature in the machining environment, a resistivity of a working fluid used for the machining, or an amplitude or a frequency of vibration occurring in the machining environment.

10. The determination device according to any one of claims 1 to 3, wherein
the acquisition unit acquires the plurality of types of machining environment information measured by each of a plurality of the electrical discharge machines,
the determination unit determines whether or not each of the plurality of machining conditions is suitable for the machining environment, for each of the electrical discharge machines, and
in each of the plurality of electrical discharge machines, in the case that it is determined that the at least one machining condition is not suitable for the machining environment, the display control unit displays the at least one machining condition in the identifiable manner or does not display the at least one machining condition.

11. A control device (30) of an electrical discharge machine, comprising the determination device according to any one of claims 1 to 9, the electrical discharge machine being configured to perform the machining on a workpiece by generating electrical discharge between an electrode and the workpiece in accordance with the machining condition specified by the operator.
